# EUROPÄISCHE PATENTSCHRIFT

(11) **EP 0 937 898 B1**
(45) Veröffentlichungstag und Bekanntmachung des Hinweises auf die Patenterteilung: **07.11.2001**
(21) Anmeldenummer: 99100813.7
(22) Anmeldetag: 18.01.1999
(51) Int. Cl.: F16B 5/06

(54) **Verbindung zwischen einem Träger und einem Plattenelement**
Fastening element between a support and a panel
Dispositif de fixation entre un support et un panneau

(30) Priorität: 18.02.1998 DE 19806827
(43) Veröffentlichungstag der Anmeldung: 25.08.1999
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- DE-A- 2 249 451
- DE-A- 2 718 170
- DE-A- 19 753 678
- US-A- 4 648 766

## Beschreibung

Die Erfindung bezieht sich auf eine Verbindung zwischen einem Träger, insbesondere einem Karosserieteil eines Kraftfahrzeugs und einem Plattenelement, insbesondere einer Türverkleidung, bestehend aus einem Verbindungsteil mit einem an dem Plattenelement befestigbaren Oberteil und einem mit dem Träger verbindbaren Unterteil, wobei zwischen dem Oberteil und dem Unterteil ein mit Verrastungselementen versehener, halsförmig ausgebildeter Zwischenbereich vorgesehen ist, und einem in eine Trägeröffnung einlagerbaren, mit Gegenrasten versehenen Eingriffsteil welches in seinem vorderen Bereich der Zwischenbereich des Verbindungsteils durchsetzt und hinter der Trägeröffnung in Montageposition spreizt.

Es ist bereits eine derartige Konstruktion vorgeschlagen worden (DE 197 53 678), welche durch das Zusammenwirken der Verrastungselemente des halsförmig ausgebildeten Zwischenbereichs und der Gegenrasten vorteilhafterweise einen guten Toleranzausgleich über einen großen Bereich gewährleistet. Dadurch, dass der Zwischenbereich im vorderen Teil das Eingriffsteil durchsetzt und hinter der Trägeröffnung, beispielsweise einer Türöffnung eines Kraftfahrzeuges, spreizt, ist außerdem eine sichere Befestigung des Verbindungsteils an dem Träger gewährleistet.

Aufgabe der vorliegenden Erfindung ist es, diese Verbindung zwischen einem Träger und einem Plattenelement dahingehend zu verbessern, dass ohne großen baulichen Aufwand eine einwandfreie Abdichtung der Trägeröffnung gewährleistet ist.

Diese Aufgabe wird erfindungsgemäß dadurch gelöst, dass zwischen dem unteren Bereich des Oberteils und einem dem Träger benachbarten Flansch des Eingriffsteils eine aus Dichtmaterial bestehende, den Zwischenbereich umschließende, rohrförmige Schlauchdichtung angeordnet ist. Durch diese Schlauchdichtung ist es möglich, in Montageposition der erfindungsgemäßen Verbindung die Trägeröffnung einwandfrei abzudichten, und zwar dadurch, dass in montierter Position die Schlauchdichtung zwischen dem Flansch und der Oberfläche des Trägers verklemmt ist und die Form zweier gegeneinander gerichteter Doppelkegelabschnitte aufweist. Hierbei ist vorteilhafterweise der dem Träger benachbarte Endabschnitt der Schlauchdichtung zwischen dem Flansch des Eingriffsteils und der Oberfläche des Trägers festgeklemmt.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1 und 2: jeweils Seitenansichten der erfindungsgemäßen Verbindung mit Schlauchdichtung in vormontierter Position;
- Fig. 3 und 4: jeweils einen Schnitt nach der Linie III-III in Fig. 2 bzw. IV-IV in Fig. 1;
- Fig. 5 und 6: jeweils perspektivische Ansichten der erfindungsgemäßen Verbindung in vormontierter Position;
- Fig. 7, 8, 9 und 10: jeweils Ansichten der erfindungsgemäßen Verbindung in Montageposition in verschiedenen Ansichten;
- Fig. 11: einen Schnitt nach der Linie XI-XI in Fig. 10; und
- Fig. 12: einen Schnitt nach der Linie XII-XII in Fig. 7.

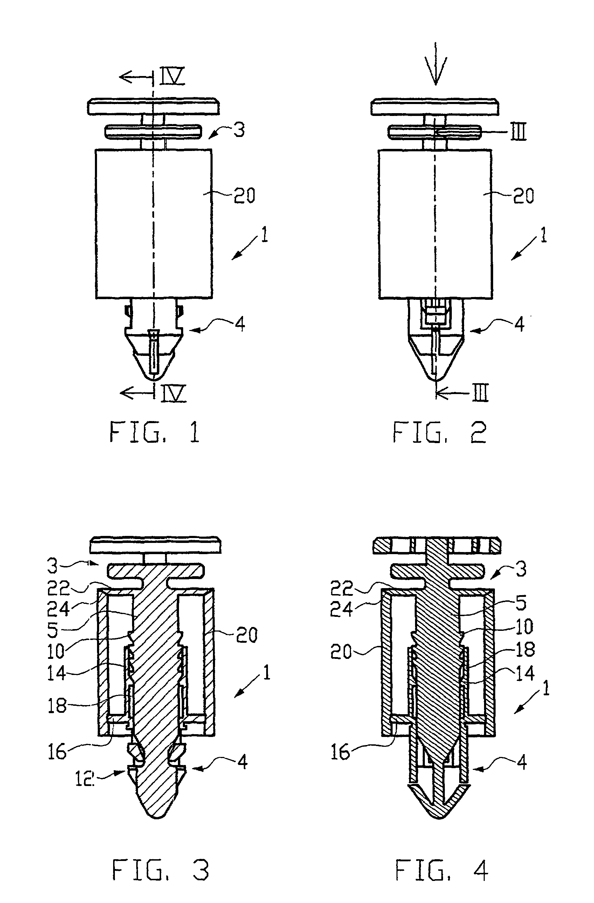

In den Fig. 1 bis 5 ist die erfindungsgemäße Verbindung 1 in vormontierter Position dargestellt. Diese Verbindung 1 besteht aus einem Verbindungsteil mit Oberteil 3, beispielsweise mit mindestens zwei axial im Abstand voneinander angeordneten, nicht näher bezeichneten Flanschen sowie einem mit einem Träger verbindbaren Unterteil 4.

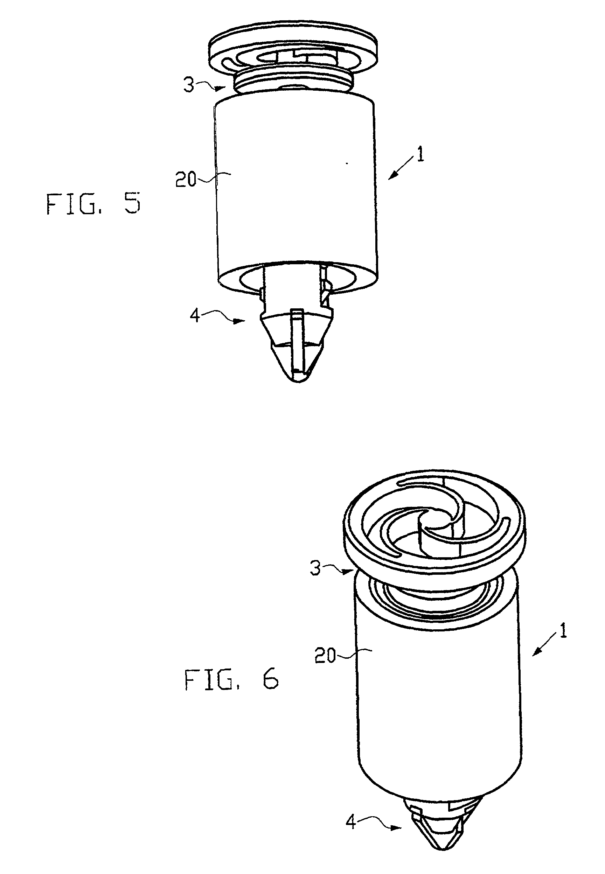

Aus Fig. 3 geht hervor, dass zwischen dem Oberteil 3 und dem Unterteil 4 ein mit Verrastungselementen 10 versehener, halsförmig ausgebildeter Zwischenbereich 5 vorgesehen ist, welcher ein in eine Trägeröffnung einlagerbares, mit Gegenrasten 14 versehenes Eingriffsteil 12 im vorderen Bereich durchsetzt.

Insbesondere aus den Fig. 3 und 4 ist ersichtlich, dass zwischen dem unteren Bereich des Oberteils 3 und einem Flansch 16 des Eingriffsteils 12 eine aus Dichtmaterial bestehende, den Zwischenbereich 5 umschließende, rohrförmige Schlauchdichtung 20 angeordnet ist.

Aus den Fig. 3 und 4 geht darüber hinaus hervor, dass das Eingriffsteil 12 oberhalb des Flansches 16 als Hülse 18 ausgebildet ist, an deren Innenumfang die Gegenrasten 14 angeordnet sind, welche mit den Verrastungselementen 10 des Zwischenbereichs 5 zusammenwirken. In dieser vormontierten Position lässt sich die erfindungsgemäße Verbindung in eine Öffnung eines Trägers, beispielsweise einer Kraftfahrzeugkarosserie einsetzen.

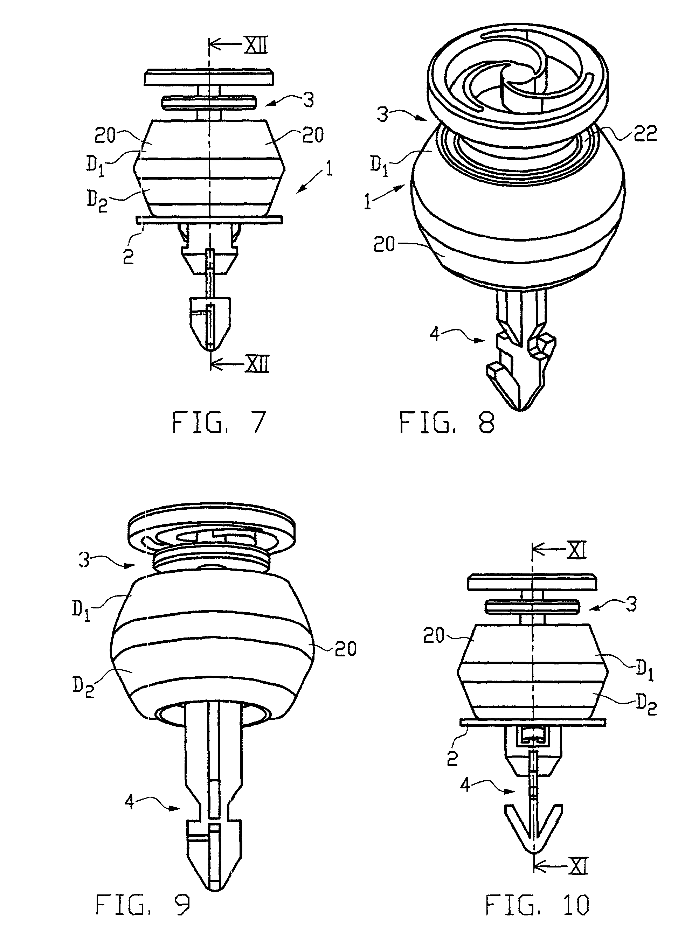

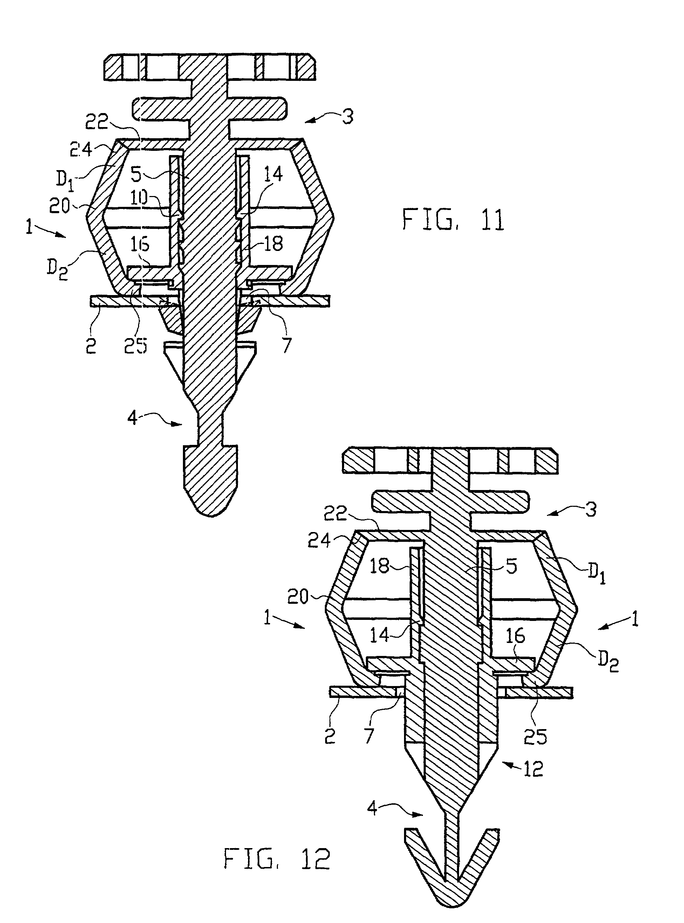

Insbesondere die Fig. 11 und 12 zeigen, dass ein Träger 2 eine Trägeröffnung 7 aufweist, in welche die erfindungsgemäße Verbindung 1 in der in den Fig. 1 bis 6 dargestellten vormontierten Position eingesetzt wird. Anschließend wird auf das Oberteil 3 nach Fig. 2 in Pfeilrichtung ein Druck ausgeübt, so dass nunmehr das Eingriffsteil 12 eine Spreizung hinter der Trägeröffnung 7 erfährt, wodurch die erfindungsgemäße Verbindung die in den Fig. 7 bis 12 dargestellte Position einnimint und in dieser Lage einwandfrei gesichert ist. Hierbei lagern sich die Verrastungselemente 10 des Zwischenteils 5 in den entsprechenden Gegenrasten 14 der Hülse 18 ein und fixieren die erfindungsgemäße Verbindung in dieser Montageposition.

Beim Übergang von der vormontierten Position nach den Fig. 1 bis 6 in die Montageposition nach den Fig. 7 bis 12 erfährt die bislang rohrförmig ausgebildete Schlauchdichtung 20 eine Deformation und nimmt die Form zweier gegeneinander gerichteter Doppelkegelabschnitte D₁ und D₂ an. Diese Verformung ergibt sich daraus, dass das Oberteil 3 im unteren Bereich einen Flansch 22 aufweist, welcher vorzugsweise einen konisch zulaufenden, die Stirnseite der Schlauchdichtung 20 beaufschlagenden Rand 24 besitzt. Dieser Rand 24 drückt die Schlauchdichtung 20 aus der rohrförmigen Lage in die Doppelkegelabschnittslage.

Insbesondere aus den Fig. 11 und 12 ist erkennbar, dass in Montageposition der dem Träger 2 benachbarte Endabschnitt 25 der Schlauchdichtung 20 zwischen dem Flansch 16 des Eingriffsteils 12 und der Oberfläche des Trägers 2 geklemmt ist. Damit ist durch die Schlauchdichtung 20 auf einfache Weise gewährleistet, dass die Trägeröffnung 7 eine sehr effektive Abdichtung erfährt, wobei andererseits durch das Zusammenwirken der Verrastungselemente 10 mit den Gegenrasten 14 sowie durch die entsprechenden Halteelemente des Eingriffsteils 12 die erfindungsgemäße Verbindung einwandfrei an dem Träger 2 befestigt ist.

Durch die erfindungsgemäße Konstruktion der Verbindung 1 wird ermöglicht, dass, ausgehend von dem eingangs genannten Stand der Technik, eine funktionssichere Abdichtung geschaffen wird, ohne dass große technische Umgestaltungen erforderlich sind.

## Patentansprüche

1. Verbindung (1) zwischen einem Träger (2), insbesondere Karosserieteil eines Kraftfahrzeuges, und einem Plattenelement, insbesondere einer Türverkleidung stehend aus einem verbindungsteil mit einem an dem Plattenelement befestigbaren Oberteil (3) und einem mit dem Träger (2) verbindbaren Unterteil (4),
wobei zwischen dem Oberteil (3) und dem Unterteil (4) ein mit Verrastungselementen (10) versehener, halsförmig ausgebildeter Zwischenbereich (5) vorgesehen ist, und einem in eine Trägeröffnung (7) einlagerbaren, mit Gegenrasten (14) versehenen Eingriffsteil (12) welches in seinem vorderen Bereich der Zwischenbereich (5) des Verbindungsteils durchsetzt und hinter der Trägeröffnung (7) in Montageposition spreizt,
**dadurch gekennzeichnet,**
**dass** zwischen dem unteren Bereich des Oberteils (3) und einem dem Träger (2) benachbarten Flansch (16) des Eingriffsteils (12) eine aus Dichtmaterial bestehende, den Zwischenbereich (5) umschließende, rohrförmige Schlauchdichtung (20) angeordnet ist.

2. Verbindung nach Anspruch 1, wobei das Oberteil (3) im unteren Bereich einen Flansch (22) aufweist,
**dadurch gekennzeichnet,**
**dass** in Montageposition die Schlauchdichtung (20) zwischen dem Flansch (22) und der Oberfläche des Trägers (2) verklemmt ist und die Form zweier gegeneinander gerichteter Doppelkegelabschnitte (D₁, D₂) aufweist.

3. Verbindung nach Anspruch 2,
**dadurch gekennzeichnet,**
**dass** in Montageposition der dem Träger (2) benachbarte Endabschnitt (25) der Schlauchdichtung (20) zwischen den Flansch (16) des Eingriffsteils (12) und die Oberfläche des Trägers (2) geklemmt ist.

4. Verbindung nach einem oder mehreren der vorhergehenden Ansprüche,
**dadurch gekennzeichnet,**
**dass** das Eingriffsteil (12) oberhalb des Flansches (16) als Hülse (18) ausgebildet ist, an deren Innenumfang die Gegenrasten (14) angeordnet sind.

5. Verbindung nach Anspruch 2,
**dadurch gekennzeichnet,**
**dass** der Flansch (22) des Oberteils (3) einen konisch zulaufenden, die Stirnseite der Schlauchdichtung (20) beaufschlagenden Rand (24) aufweist.

6. Verbindung nach einem oder mehreren der vorhergehenden Ansprüche,
**dadurch gekennzeichnet,**
**dass** das Dichtungsmaterial der Schlauchdichtung (20) Gummi oder Kunststoff ist.

## Claims

1. Connection (1) between a support (2), in particular a body part of a motor vehicle, and a panel element, in particular a door covering, the said connection comprising a connecting part having an upper part (3) which can be fastened to the panel element and a lower part (4) which can be connected to the support (2), in which case an intermediate region (5) which is provided with latching elements (10) and is of neck-shaped design is provided between the upper part (3) and the lower part (4), and comprising an engagement part (12) which can be inserted into a support opening (7), is provided with mating latches (14) and passes in its front region through the intermediate region (5) of the connecting part and in the installation position expands behind the support opening (7), **characterized in that** a tubular hose-type seal (20) which consists of sealing material and surrounds the intermediate region (5) is arranged between the lower region of the upper part (3) and a flange (16) of the engagement part (12), which flange is adjacent to the support (2).

2. Connection according to Claim 1, where the upper part (3) has a flange (22) in the lower region, **characterized in that** in the installation position the hose-type seal (20) is wedged between the flange (22) and the surface of the support (2) and has the form of two double-cone sections (D₁, D₂) directed towards each other.

3. Connection according to Claim 2, **characterized in that** in the installation position that end section (25) of the hose-type seal (20) which is adjacent to the support (2) is clamped between the flange (16) of the engagement part (12) and the surface of the support (2).

4. Connection according to one or more of the preceding claims, **characterized in that** the engagement part (12) is designed above the flange (16) as a sleeve (18) on whose inner circumference the mating latches (14) are arranged.

5. Connection according to Claim 2, **characterized in that** the flange (22) of the upper part (3) has a conically tapering edge (24) which acts on the end side of the hose-type seal (20).

6. Connection according to one or more of the preceding claims, **characterized in that** the sealing material of the hose-type seal (20) is rubber or plastic.

## Revendications

1. Dispositif de liaison (1) entre un support (2), en particulier une partie de la carrosserie d'un véhicule automobile, et un élément en forme de plaque, en particulier un habillage de porte, comprenant une partie de liaison avec une partie supérieure (3) susceptible d'être fixée à l'élément en forme de plaque et une partie inférieure (4) susceptible d'être reliée au support (2), dans lequel entre la partie supérieure (3) et la partie inférieure (4) est prévue une zone intermédiaire (5) réalisée en forme de rétrécissement et pourvue d'éléments d'enclenchement (10), et comprenant un élément d'engagement (12) susceptible d'être mis en place dans une ouverture (7) du support et doté d'éléments d'enclenchement antagonistes (14), ledit élément d'engagement traversant dans sa zone antérieure la zone intermédiaire (5) de la partie de liaison, et s'écartant derrière l'ouverture (7) du support dans la position de montage,
**caractérisé en ce qu'**un étanchement en forme de tuyau tubulaire (20) constitué en matériau d'étanchéité et entourant la zone intermédiaire (5) est agencé entre la région inférieure de la partie supérieure (3) et une bride (16) de la partie d'engagement (12) voisine du support (2).

2. Dispositif de liaison selon la revendication 1, dans lequel la partie supérieure (3) comporte une bride (22) dans la région inférieure,
**caractérisé en ce que** dans la position de montage, l'étanchement en forme de tuyau (20) est coincé entre la bride (22) et la surface du support (2), et présente la forme de deux tronçons coniques doubles (D₁, D₂) orientés en sens opposés.

3. Dispositif de liaison selon la revendication 2,
**caractérisé en ce que** dans la position de montage, le tronçon final (25) voisin du support (2) de l'étanchement en forme de tuyau (20) est coincé entre la bride (16) de la partie d'engagement (12) et la surface du support (2).

4. Dispositif de liaison selon l'une ou plusieurs des revendications précédentes,
**caractérisé en ce que** la partie d'engagement (12) est réalisée au-dessus de la bride (16) sous la forme d'une douille (12) à la périphérie intérieure de laquelle sont agencés les éléments d'enclenchement antagonistes (14).

5. Dispositif de liaison selon la revendication 2,
**caractérisé en ce que** la bride (22) de la partie supérieure (3) comporte une bordure (24) convergeant de manière conique et attaquant la face frontale de l'étanchement en forme de tuyau (20).

6. Dispositif de liaison selon l'une ou plusieurs des revendications précédentes,
**caractérisé en ce que** le matériau de l'étanchement en forme de tuyau (20) est du caoutchouc ou de la matière plastique.
